# EUROPEAN PATENT SPECIFICATION

(11) **EP 0 914 037 B1**
(45) Date of publication and mention of the grant of the patent: **21.08.2002**
(21) Application number: 97921537.3
(22) Date of filing: 20.05.1997
(51) Int. Cl.: A01G 31/02

(54) **HYDROPONIC APPARATUS USING ELLIPTICAL CONDUIT**
EIN ELLIPTISCHES LEITUNGSROHR VERWENDENDE HYDROPONISCHE VORRICHTUNG
APPAREIL DE CULTURE HYDROPONIQUE UTILISANT UN CONDUIT ELLIPTIQUE

(30) Priority: 20.05.1996 AU PN995096
(43) Date of publication of application: 12.05.1999
(73) Proprietor: Boxsell, Lynette Mavis, Burbank, QLD 4156 (AU); Boxsell, Desmond James, Burbank, QLD 4156 (AU)
(72) Inventor: BOXSELL, Desmond, James, Burbank, QLD 4156 (AU)
(74) Representative: Copp, David Christopher
(86) International application number: AU9700321
(87) International publication number: WO97043896

(56) References cited:
- AU-A- 6 056 580
- AU-A- 7 700 791
- US-A- 2 670 571
- US-A- 3 872 621
- US-A- 4 118 891
- US-A- 4 476 651
- US-A- 5 010 686
- US-A- 5 252 108
- Home hydroponics, R, Sorenson
- Overview of hydroponics

## Description

This invention relates to a hydroponic apparatus.

This invention has particular but not exclusive application to a hydroponic apparatus, and for illustrative purposes reference will be made to such application.

Hydroponics involves growing plants in the absence of soil, the necessary nutrients being delivered to the plants in the form of a nutrient solution in water, which passes over the roots of the plant. Hydroponic techniques have certain advantages over more conventional agriculture, which include the ability to carefully control optimum feeding, the elimination of weeds and it allows an improved control of pests and diseases. However, there is a high capital cost compared to traditional methods of agriculture. For this reason, hydroponic cultivation has to be carried out relatively intensively and efficiently if it is to be commercially viable.

One hydroponic method is where the roots of the plants are contained in gullies or conduits which are irrigated, generally continuously, with a nutrient solution.

Many designs for efficient, long lasting and easily installed gully or conduit systems have been trialed. Various rigid and semi-rigid gullies and conduits are known. For example, there are rigid plastic extruded conduits of rectangular or circular cross-section (see e.g. US-A-5010686).

However, a number of disadvantages are evident with the existing rigid-type conduits. For example, with flat-based conduits, the nutrient flow is not always concentrated through the roots. Rather the flow of nutrients can pass either side of the roots, thus depriving the roots of maximum exposure to the nutrients. Furthermore, the flat top of such conduits tend to trap rain water which has a tendency which in turn may enter the conduit through the opening through which the plant is growing, thus diluting the nutrient solution.

With circular conduits, the roots of the plant are constrained such that, essentially, the lateral growth of the roots equals the longitudinal growth, whereas, in nature, it is preferred that the lateral growth be greater than the longitudinal growth. This can be obviated by transplanting the plant to a conduit having a larger internal diameter at an appropriate time in the development of the plant. However the additional handling of the plant increases costs of production. A further disadvantage of a circular conduit is that it is too "deep" for certain plants such as lettuce and herbs which only have a shallow root ball and thus cannot be effectively coated with the nutrient solution.

The present invention aims to alleviate at least one of the abovementioned disadvantages and to provide a hydroponic apparatus which will be reliable and efficient in use. Other objects and advantages of this invention will hereinafter become apparent.

Throughout this specification, the term "substantially elliptical cross-section' is not limited to a cross-section which delineates a regular oval, but includes within its scope any related non-regular cross-section or similar but wherein the major axis remains of a greater length than the minor axis.

According to the invention, there is provided a hydroponic conduit comprising a dimensionally stable elongate member having at least one opening formed therein through which a plant may extend characterised in that said member is of substantially elliptical cross-section and the opening is formed in the upper surface of said member and wherein the major axis of the substantially elliptical cross-section of said member is substantially horizontal.

Preferably, the spacing between adjacent openings may be determined by the type of plant to be grown. For example, the openings may be spaced at regular intervals longitudinally along one surface of the member and each opening may be substantially co-axial with the minor axis of the member.

Because the elongated member may be initially provided to purchasers as a hollow elongated member without any openings formed therein, in one embodiment, an etched line may be provided along one surface of the member, such as a line co-axial with the minor axis of the member. The etch line may be used as a guide for the centre of openings to be cut into the member subsequently by the purchasers according to their individual requirements.

In use, the conduit would be used as a component of a hydroponic apparatus and in a method of hydroponic culture.

Therefore, according to a second aspect of the present invention, there is provided a hydroponic apparatus for use in hydroponic culture, said apparatus including at least one hydroponic conduit as set forth above, said at least one hydroponic conduit being provided with inlet means for introducing a nutrient solution into said hydroponic conduit, outlet means for allowing nutrient solution to exit said hydroponic conduit and at least one opening formed in said hydroponic conduit through which a plant may extend.

In one embodiment there may be provided inlet means associated with each end of the conduit and outlet means associated with an intermediate portion of the conduit. In yet another embodiment the inlet means may be associated with a portion of the conduit intermediate the opposing ends of the conduit and wherein each end may include outlet means. However, preferably the inlet means is associated with one end of the conduit and the outlet means is associated with the opposing end of the conduit.

Furthermore, it will be appreciated that the apparatus may include a multiplicity of conduits positioned such that the major axes are substantially horizontal and in a side-by-side relationship. The conduits may be supported by a supporting structure such as a table.

The outlet means may include drainage means, such as a sump, which may be adapted to collect solid or semisolid detritus and separate same from the exiting nutrient solution before the thus-depleted solution is returned to the inlet means of the conduit.

In yet another aspect of this invention, there is provided a method of hydroponic culture, said method including providing a hydroponic conduit according to either one of Claims 1 or 2, said hydroponic conduit being provided with inlet means for introducing a nutrient solution into said hydroponic conduit, outlet means for allowing the nutrient solution to exit said hydroponic conduit and at least one opening formed therein through which a plant may extend; supporting the plant within said opening such that at least some roots of the plant are retained within the hydroponic conduit, and using the inlet means to introduce a sufficient quantity of a nutrient solution into said hydroponic conduit to make contact with the roots of the plant.

In order that this invention may be more easily understood and put into practical effect, reference will now be made to the accompanying drawings which illustrate a preferred embodiment of the invention, wherein:-
FIG 1A is a preform of a conduit to be constructed in accordance with the present invention;
FIG 1B is the preform of FIG 1A further modified to a conduit constructed in accordance with the present invention;
FIG 1C is the material removed from the openings in the conduit of FIG 1B, and
FIG 2 is a hydroponic apparatus incorporating a multiplicity of the conduit of FIG 1B.

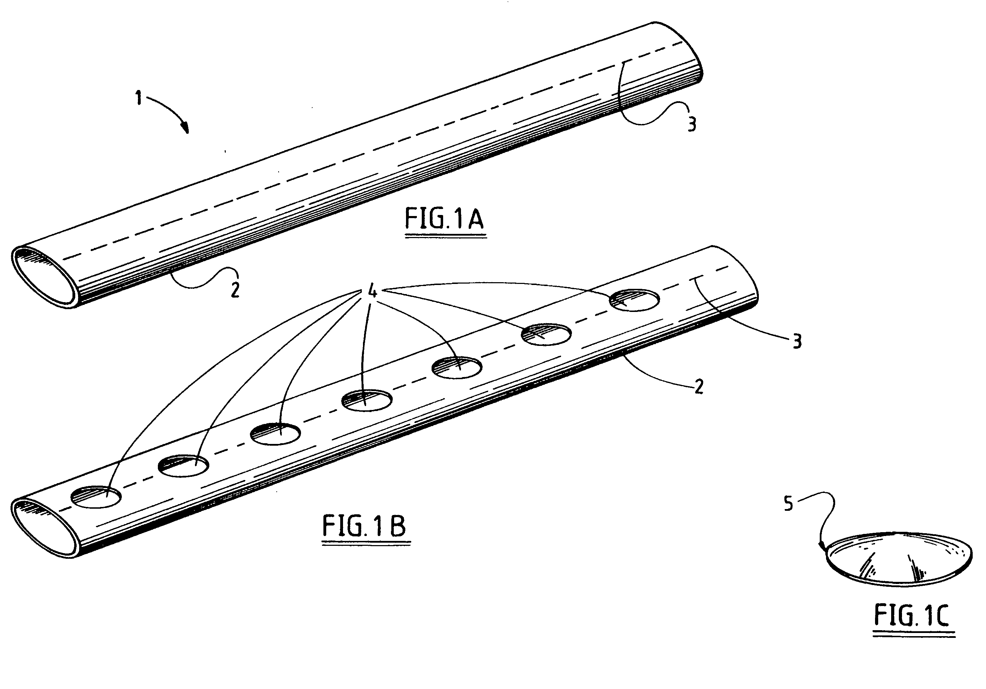

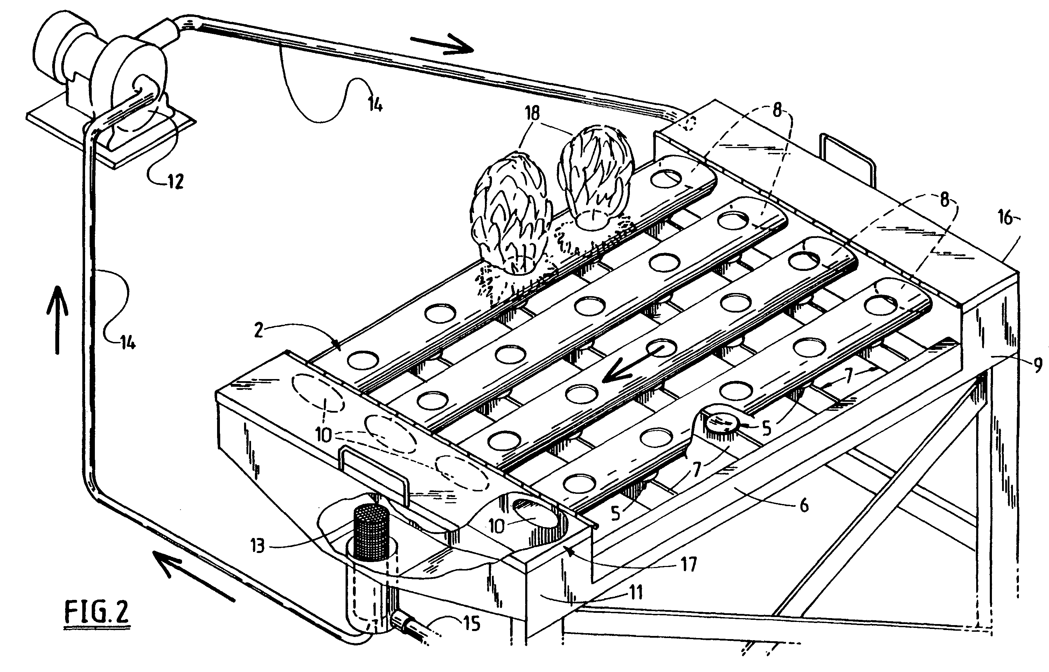

With reference to FIG 1A, the preform (1) is an elongated hollow tube (2) of substantially elliptical cross-section. An etch line (3) is scored along one surface thereof co-axial with the minor axis of the tube (2). The etch line (3) identifies the centre of circular openings (4) spaced equi-distant along the surface of the tube (2) (FIG 1B). The resultant cutouts (5) (FIG 1C) are retained for future use in the construction of the apparatus depicted in FIG 2.

The apparatus of FIG 2 comprises a perimeter frame (6), the lateral sides of which are connected by spaced cross-members (7). The cutouts (5) are fixed to the cross-members (7) to support the tubes (2) - for example, they can be glued or rivetted into place, or affixed by any other suitable means known. The tubes (2) are then glued to the cutouts (5). The inlet end (8) of each tube (2) protrudes into a nutrient storage container (9) affixed to one end of the frame (6) by any suitable means. The outlet end (10) of each tube (2) protrudes into a sump (11) affixed to the opposite end of the frame (6) by any suitable means. A pump (12) pumps nutrient solution from the storage container (9) through the tube (2) to the sump (11) whereat the thus-pumped solution passes through any suitable filter (13) and is returned to the storage container (9) via piping (14) and the pump (12). As illustrated, a suitable filter could be a hollow net-like tube with small holes which allow the nutrient solution to pass through but not solids or semi-solids. The detritus that remains in the sump (11) can be removed through any suitable drain (15). Each of the storage container (9) and sump (11) has a hinged lid (16) and (17) respectively which allows easy access to the contents thereof.

In use, seedlings (18) (only partly illustrated in FIG 2) are restrained in the openings (4) by any convenient means and nutrient solution is pumped through the apparatus. The elliptical cross-section of the tube (2) ensures that the majority of the nutrient solution flows through the tube (2) at its lowest point thus ensuring maximum and continual contact of the solution with the root ball of the plants.

By using the present invention, it has been found that the plant growth is enhanced over prior art arrangements. Although not wishing to be bound by theory, it is believed that this is due to, not only to the increased contact with the nutrient solution, but also to the better lateral growth of the root ball which imparts a "tumbling" action to the nutrient solution as it passes through leading to beneficial aeration of the nutrient solution. The growth rate of plants grown under these conditions is quicker, and the resultant plants appear healthier, over those grown by other hydroponic techniques. The elliptical surface of the conduit near the plant holes provides a better run-off for rain, thus reducing the entry of rain water into the conduit through the holes which would increase the dilution of the nutrient solution.

It will be appreciated that the above example is given as an illustration only of the present invention and that all such modifications and variations thereto as would be apparent to persons skilled in the art are deemed to fall within the broad scope and ambit of this invention as is herein defined in the appended claims.

## Claims

1. A hydroponic conduit comprising a dimensionally stable elongate member (2) having at least one opening (4) formed therein through which a plant (18) may extend **characterised in that** said member (2) is of substantially elliptical cross-section and the opening (4) is formed in the upper surface of said member and wherein the major axis of the substantially elliptical cross-section of said member is substantially horizontal.

2. A hydroponic conduit according to claim 1, wherein said member has an etched line in the upper surface of said member, which functions as a guide to allow openings to be cut into the member.

3. A hydroponic apparatus for use in hydroponic culture, said apparatus including:
at least one hydroponic conduit (2) according to any one of Claims 1 or 2, said at least one hydroponic conduit being provided with inlet means (8) for introducing a nutrient solution into said hydroponic conduit, outlet means (10) for allowing nutrient solution to exit said hydroponic conduit and at least one opening (4) formed in said hydroponic conduit through which a plant may extend.

4. A hydroponic apparatus as claimed in Claim 3, wherein said inlet means (8) is associated with one end of said hydroponic conduit (2) and said outlet means (10) is associated with the opposing end of said hydroponic conduit (2).

5. A hydroponic apparatus as claimed in Claim 3 or Claim 4, wherein said apparatus includes- drainage means (15) in fluid communication with said outlet means (10).

6. A hydroponic apparatus as claimed in any one of Claims 3 to 5, wherein said apparatus also include a pump (12) in fluid communication with said inlet means (8) and said outlet means (10), said pump being adapted to pump nutrient solution from said outlet means (10) to said inlet means (8).

7. A hydroponic apparatus as claimed in any one of Claims 3 to 6, wherein the cutout (5) removed from said member (2) in order to form said opening (4) is used to support said member, said cutout being attached to a supporting structure (7).

8. A method of hydroponic culture, said method including:
providing a hydroponic conduit (2) according to either one of Claims 1 or 2, said hydroponic conduit (2) being provided with inlet means (8) for introducing a nutrient solution into said hydroponic conduit, outlet means (10) for allowing the nutrient solution to exit said hydroponic conduit and at least one opening (4) formed therein through which a plant (18) may extend;
supporting the plant (18) within said opening (4) such that at least some roots of the plant are retained within the hydroponic conduit (2), and
using the inlet means (8) to introduce a sufficient quantity of a nutrient solution into said hydroponic conduit to make contact with the roots of the plant (18).

## Patentansprüche

1. Hydrokultur-Kanal, umfassend ein maßbeständiges, längliches Teil (2), welches mindestens eine darin gebildete Öffnung (4) hat, durch welche eine Pflanze (18) sich erstrecken kann,
**dadurch gekennzeichnet,**
**daß** das genannte Teil (2) einen im wesentlichen elliptischen Querschnitt aufweist und die Öffnung (4) in der oberen Oberfläche des genannten Teils gebildet ist, und wobei die Hauptachse des im wesentlichen elliptischen Querschnitts des genannten Teils im wesentlich horizontal verläuft.

2. Hydrokultur-Kanal nach Anspruch 1,
bei dem das genannte Teil eine geätzte Linie in der oberen Oberfläche des genannten Teils hat, welche als Leitlinie wirkt, um das Einschneiden von Öffnungen in das Teil zu erlauben.

3. Hydrokultur-Vorrichtung zur Verwendung bei Hydrokulturen, welche genannte Vorrichtung umfaßt:
mindestens einen Hydrokultur-Kanal (2) gemäß einem der Ansprüche 1 oder 2, wobei der genannte mindestens eine Hydrokultur-Kanal versehen ist mit Einlaßmitteln (8) zum Einführen einer Nährlösung in den genannten Hydrokultur-Kanal, mit Auslaßmitteln (10) zum Austreten der Nährlösung aus dem genannten Hydrokultur-Kanal und mit mindestens einer Öffnung (4), die in dem genannten Hydrokultur-Kanal gebildet ist, durch welchen sich eine Pflanze erstrecken kann.

4. Hydrokultur-Vorrichtung nach Anspruch 3,
bei der die genannten Einlaßmittel (8) verbunden sind mit einem Ende des genannten Hydrokultur-Kanals (2) und bei der die genannten Auslaßmittel (10) verbunden sind mit dem gegenüberliegenden Ende des genannten Hydrokultur-Kanals (2).

5. Hydrokultur-Vorrichtung nach Anspruch 3 oder 4,
bei der die genannte Vorrichtung Drainagemittel (15) einschließt, die in Strömungsverbindung mit den genannten Auslaßmitteln (10) stehen.

6. Hydrokultur-Vorrichtung nach einem der Ansprüche 3 bis 5,
bei der die genannte Vorrichtung ebenfalls eine Pumpe (12) einschließt, die in Strömungsverbindung mit den genannten Einlaßmitteln (8) und den genannten Auslaßmitteln (10) steht, wobei die genannte Pumpe dazu ausgebildet ist, Nährlösung von den genannten Äuslaßmitteln (10) zu den genannten Einlaßmitteln (8) zu pumpen.

7. Hydrokultur-Vorrichtung nach einem der Ansprüche 3 bis 6,
bei der ein Ausschnitteil (5), welches zur Bildung der genannten Öffnung (4) von dem genannten Teil (2) entfernt wurde, zur Abstützung des genannten Teils verwendet wird, wobei das Ausschnitteil an einer Stützstruktur (7) angebracht ist.

8. Verfahren einer Hydrokultur, welches Verfahren umfaßt:
Vorsehen eines Hydrokultur-Kanals (2) gemäß einem der Ansprüche 1 oder 2, wobei der Hydrokultur-Kanal (2) mit Einlaßmitteln (8) zum Einführen einer Nährlösung in den genannten Hydrokultur-Kanal versehen ist, mit Auslaßmitteln (10), die der Nährlösung einen Austritt aus dem Hydrokultur-Kanal erlauben und wobei darin mindestens eine Öffnung (4) gebildet ist, durch die eine Pflanze (18) sich erstrecken kann;
Abstützen der Pflanze (18) innerhalb der genannten Öffnung (4) derart, daß mindestens einige Wurzeln der Pflanze innerhalb des Hydrokultur-Kanals (2) gehalten werden, und
Verwendung der Einlaßmittel (8) zum Einführen einer ausreichenden Menge einer Nährlösung in den genannte Hydrokultur-Kanal, um diese in Berührung mit den Wurzeln der Pflanzen (18) zu bringen.

## Revendications

1. Conduit hydroponique comprenant un élément allongé (2) dimensionnellement stable, à travers au moins une ouverture (4) duquel une plante (18) peut passer, **caractérisé en ce que** ledit élément a une section transversale essentiellement elliptique, l'ouverture (4) étant formée à sa surface supérieure, et **en ce que** l'axe principal de la section transversale de l'élément est essentiellement horizontal.

2. Conduit hydroponique selon la revendication 1, dans lequel ledit élément possède à sa surface supérieure une ligne d'entailles servant de guide pour la découpe des ouvertures dans l'élément.

3. Appareil hydroponique pour la culture hydroponique, comprenant :
au moins un conduit hydroponique (2) selon la revendication 1 ou 2, ce conduit étant pourvu d'une entrée (8) pour l'introduction dans le conduit d'une solution nutritive, d'une sortie (10) pour son évacuation du conduit, et d'au moins une ouverture (4) formée dans le conduit hydroponique et propre à être traversée par une plante.

4. Appareil hydroponique selon la revendication 3, dans lequel ladite entrée (8) est située à une extrémité du conduit hydroponique (2) et la sortie (10) à son extrémité opposée.

5. Appareil hydroponique selon la revendication 3 ou 4, comprenant des moyens de drainage (15) en communication avec ladite sortie (10).

6. Appareil hydroponique selon l'une quelconque des revendications 3 à 5, comprenant également une pompe (12) en communication avec ladite entrée (8) et ladite sortie (10), cette pompe étant adaptée à pomper la solution nutritive de la sortie (10) vers l'entrée (8).

7. Appareil hydroponique selon l'une quelconque des revendications 3 à 6, dans lequel la découpe (5) enlevée de l'élément (2) pour former ladite ouverture (4) est utilisée pour supporter ledit élément, cette découpe étant reliée à une structure de support (7).

8. Procédé de culture hydroponique consistant :
- à disposer d'un conduit hydroponique (2) selon la revendication 1 ou 2, ce conduit étant pourvu d'une entrée (8) pour l'introduction dans le conduit d'une solution nutritive, d'une sortie (10) pour son évacuation dudit conduit, et d'au moins une ouverture (4) formée dans le conduit et pouvant être traversée par une plante (18) ;
- à supporter la plante (18) dans ladite ouverture (4) de sorte qu'au moins certaines de ses racines soient retenues à l'intérieur du conduit (2) ; et
- à utiliser ladite entrée (8) pour introduire une quantité suffisante de solution nutritive dans le conduit hydroponique, pour qu'elle entre en contact avec les racines de la plante (18).
